Europäisches Patentamt

European Patent Office

Office européen des brevets

(19)

(11) Publication number: **0 418 756 A2**

## EUROPEAN PATENT APPLICATION

(21) Application number: 90117760.0

(51) Int. Cl.⁵: **F16D 69/02**

(22) Date of filing: 14.09.90

(30) Priority: 18.09.89 JP 241570/89
12.07.90 JP 185491/90

(43) Date of publication of application:
27.03.91 Bulletin 91/13

(84) Designated Contracting States:
**DE ES FR GB IT SE**

(71) Applicant: SUMITOMO ELECTRIC INDUSTRIES,
LTD.
5-33, Kitahama 4-chome, Chuo-ku
Osaka-shi, Osaka 541(JP)

(72) Inventor: Yamashita, Yukinori c/o Itami Works
of Sumitomo
Electric Industries, Ltd. 1-1, Koyakita
1-chome
Itami-shi Hyogo(JP)
Inventor: Nakagawa, Mitsuhiko, c/o Itami
Works of Sumitomo
Electric Industries, Ltd. 1-1, Koyakita
1-chome
Itami-shi Hyogo(JP)
Inventor: Ibuki, Masanori, c/o Itami Works of
Sumitomo
Electric Industries, Ltd. 1-1, Koyakita
1-chome
Itami-shi Hyogo(JP)
Inventor: Kishimoto, Hiroya, c/o Itami Works
of Sumitomo
Electric Industries, Ltd. 1-1, Koyakita
1-chome
Itami-shi Hyogo(JP)

(74) Representative: Herrmann-Trentepohl,
Werner, Dipl.-Ing. et al
Herrmann-Trentepohl, Kirschner, Grosse,
Bockhorni & Partner Forstenrieder Allee 59
W-8000 München 71(DE)

(54) Friction material for brake.

(57) A friction material for brake in accordance with the present invention is formed by using metallic fiber and/or aramid fiber as a main component, adding a filler to the main component and binding the main component and the filler by using a binder. The metallic fiber includes at least either copper fiber or copper alloy fiber. The filler includes one or more inorganic substances having a plane netlike crystal structure. The inorganic substances having the plane netlike crystal structure include mica, talc, vermiculite, aluminum hydroxide, magnesium hydroxide, agalmatolite, kaolin, chlorite, sericite, iron hydroxide, and montmorillonite.

## FRICTION MATERIAL FOR BRAKE

BACKGROUND OF THE INVENTION

Field of the Invention

The present invention relates generally to friction materials for friction type brakes of vehicles such as cars, or industrial machines, and particularly to friction materials for brakes which can prevent generation of brake noise of low frequency.

Description of the Background Art

Conventionally, asbestos type friction materials containing asbestos as a main component have been used as friction materials of brakes for cars and the like. However, recently, adverse effects of asbestos on human bodies have been noticed and so-called asbestos-free friction materials not using asbestos have been developed.

For instance, semi-metallic friction materials using short fibers of steel are practically utilized as asbestos-free friction materials. The semi-metallic friction materials have merits such as good resistance to wearing and to fading. However, such semi-metallic friction materials have disadvantages that they might burn in braking at high temperatures and that short fibers of steel contained in friction materials might cause considerable wearing of rotors in contact. Thus, it has been requested these days to develop non-steel friction materials not containing steel fibers as the asbestos-free friction materials.

The non-steel friction materials can solve the problems such as burning in braking at high temperatures and wearing of rotors in contact in the semi-metallic friction materials. However, compared with the conventional asbestos type friction materials, such non-steel friction materials are liable to cause brake noise of a frequency lower than 1KHz and, in some cases, there might be vibrations of a car body at the time of braking, which would give unpleasant feelings to the driver or other persons in the car. Thus, such non-steel friction materials involve new problems.

SUMMARY OF THE INVENTION

An object of the present invention is to provide a friction material for brake which does not cause any brake noise of low frequency at the time of braking.

Another object of the present invention is to provide a friction material for brake which can suppress brake noise and has good resistances to wearing and fading.

A further object of the present invention is to provide a friction material for brake not containing asbestos.

A friction material for brake according to the present invention is formed by adding filler to a main material including metallic fiber or aramid fiber, or both of those fibers, and binding the main material and the filler using a binder. The metallic fiber includes at least either copper fiber or copper alloy fiber. The filler is one or more materials selected among inorganic materials having a plane netlike crystal structure. Asbestos is not included. The inorganic substances having the plane netlike crystal structure are substances having a crystal structure in which radicals of $SiO_4$, polymeric acid radicals of $SiO_4$, and copolymeric acid radicals of $SiO_4$ and $AlO_4$ as main components, and silicic acid radicals having positive ions bound thereto are developed in a two-dimensional plane netlike manner. A more detailed explanation thereof is given in Ceramics Handbook edited by Association of Ceramics, pp. 11-18. Other substances having similar crystal structures may be used. Those substances have crystals developed in plane layers, and A slip phenomenon occurs in the layers because those layers are bound by a weak van der Waals force.

The inorganic substances having the plane netlike crystal structure include mica, talc, vermiculite, aluminum hydroxide, magnesium hydroxide, agalmatolite, kaolin, chlorite, sericite, iron hydroxide, montmorillonite, etc.

Brake noise of a frequency lower than 1KHz is considered to be caused by the so-called stick slip phenomenon occurring between the opposite rotor and the friction material of brake.

2

In general, it is considered that the stick slip phenomemon is liable to occur in friction materials having large static friction coefficients and small dynamic friction coefficients. The conventional asbestos friction materials have small static friction coefficients and small ratios static friction coefficients to dynamic friction coefficients. Consequently, when an asbestos type friction material was actually attached to a car and a brake noise experiment was performed thereon, brake noise of low frequency was unlikely to occur.

On the other hand, low steel or non-steel friction materials have large static friction coefficients and accordingly large ratios static friction coefficients to dynamic friction coefficients. Consequently, in actual brake noise experiments, the above-mentioned problems of brake noise of low frequency occurred.

The friction material for brake according to the present invention uses copper fiber and/or copper alloy fiber, or aramid fiber and/or copper type metallic fiber as the main material, and an inorganic substance having a plane netlike crystal structure as the filler. As a result of various experiments, it was found that inorganic substances having plane netlike silicic acid radicals or similar crystal structures can effectively decrease static friction coefficients of friction materials. It was further found that combination of some of the above-mentioned inorganic substances can further effectively decrease the static friction coefficients of friction materials, thereby preventing brake noise of low frequency.

The friction material according to the present invention can suppress occurrence of brake noise of low frequency and can avoid unpleasant feeling for the driven and other persons at the time of braking. In addition, the friction material according to the present invention has good resistances to fading and wearing. Thus, it is possible to solve the problem of wearing of the opposite rotor in contact which would be involved in the conventional friction materials using steel fiber.

## DESCRIPTION OF THE PREFERRED EMBODIMENTS

Performance tests of friction materials for brakes were conducted. For this purpose, asbestos friction materials and asbestos-free friction materials (according to the present inventions were manufactured. The composition ratios of the respective friction materials are shown in Tables 1-1 to 1-4 and Table 2. In Tables 1-1 to 1-4, embodiments A1 to A7 represent a group of friction materials using only muscovite as the filler; embodiments B1 to B6 represent a group of friction materials using only talc as the filler; embodiments C1 to C11 represent a group of friction materials using singly each of the inorganic substances shown in the table; and embodiments D1 to D23 represent friction materials having composition ratios in the case of using combinations of various inorganic substances as the filler. Table 2 shows composition ratios of friction materials manufactured for comparison.

Each of the friction materials was manufactured in a manner in which the materials of the composition shown in the corresponding table were mixed and thermally formed and the binder resin in the friction material was cured.

The mixing process was carried out by using a mixer having a chopper rotatable at high speed.

The thermal forming process was effected by supplying a prescribed amount of mixed materials into a mold heated at 160° C and relieving pressure with suitable timing to discharge gases generated from the raw materials from the mold. The pressure was controlled to be constant except for the pressure relieving and the time for pressurization was 10 minutes. The pressure was set so that the molded friction material may have a porosity of 10% in calculation. The porosity of each friction material was calculated by a difference between the vacuum degree and the apparent density of the friction material as shown in the following equation.

(vacuum degree) = (apparent density)/ (100 -porosity)/100

The vacuum degree of each friction material was calculated according to the corresponding table of the composition ratio based on vacuum degrees of the respective raw materials measured by an instrument of an inert gas replacement type such as a pycnometer. The apparent density was obtained by volume measurement based on the weight and external size of the friction material.

The curing process was effected at 230° C for three hours.

Thus, 47 specimens of friction materials shown in Tables 1-1 to 1-4 and Table 2 were manufactured by the above-described manufacturing process. The manufactured friction materials were subjected to an appearance test in which presence or absence of cracks of the friction materials was examined. As a result of the appearance test, cracks were found in the friction materials of the specimens A6, D18 and D19. The thermal forming conditions were changed in various manners in order to avoid cracks but as for those specimens, it was not possible to obtain friction materials without cracks.

Table 1-1

| Composition Ratios of Friction Materials | | | | | | | | | | | | |
|---|---|---|---|---|---|---|---|---|---|---|---|---|
| | embodiments | | | | | | | | | | | |
| raw material | A1 | A2 | A3 | A4 | A5 | A6 | A7 | B1 | B2 | B3 | B4 | B5 |
| copper fiber | 15 | | | | 5 | 5 | | 10 | | | | 3 |
| brass fiber | | 15 | | 15 | | | | | 10 | | 15 | |
| bronze fiber | | | 15 | | | | 15 | 5 | | 10 | | |
| phlogopite | | | | | | | | | | | | |
| muscovite | 25 | 25 | 25 | 10 | 25 | 25 | 25 | | | | | |
| talc | | | | | | | | 25 | 25 | 10 | 5 | 15 |
| $A\ell(OH)_3$ | | | | | | | | | | | | |
| vermiculite | | | | | | | | | | | | |
| $Mg(OH)_2$ | | | | | | | | | | | | |
| agalmatolite | | | | | | | | | | | | |
| kaolin | | | | | | | | | | | | |
| sericite | | | | | | | | | | | | |
| chlorite | | | | | | | | | | | | |
| $BaSO_4$ | 12 | 12 | 12 | 22 | 12 | 12 | 12 | 12 | 12 | 17 | 22 | 12 |
| aram fiber | 5 | 5 | 5 | 10 | 5 | 5 | 5 | 5 | 5 | 13 | 10 | 15 |
| caew dust | 10 | 10 | 10 | 10 | 10 | 10 | 10 | 10 | 15 | 7 | 15 | 12 |
| artificial graphite | 8 | 8 | 8 | 8 | 8 | 8 | 8 | 8 | 8 | 8 | 8 | 8 |
| glass fiber | | | | | | 10 | | | | | | |
| steel fiber | | | | 10 | | | | | | | | 10 |
| solid lubricant | | | | | | | | | | | | |
| phenol resin | 25 | 25 | 25 | 25 | 25 | 25 | 25 | 25 | 25 | 25 | 25 | 25 |
| (Note 1) Figures in the table are in vol. %. The brass fiber contains copper of 70 wt.% and zinc if 30 wt.%. The bronze fiber is PBC2C of JIS. The copper-type metallic fiber is 60μm in diameter and 3mm long. | | | | | | | | | | | | |
| (Note 2) The aramid fiber is Kepler pulp of Du Pont. | | | | | | | | | | | | |

Table 1-2

| Composition Ratios of Friction Materials | | | | | | | | | | | | |
|---|---|---|---|---|---|---|---|---|---|---|---|---|
| | embodiments | | | | | | | | | | | |
| raw material | B6 | C1 | C2 | C3 | C4 | C5 | C6 | C7 | C8 | C9 | C10 | C11 |
| copper fiber | | 10 | 10 | 10 | 10 | 10 | 10 | 10 | 10 | 10 | 10 | 10 |
| brass fiber | | | | | | | | | | | | |
| bronze fiber | | | | | | | | | | | | |
| phlogopite | | 10 | | | | | | | | | | |
| muscovite | | | | | | | 10 | | | | | |
| talc | 30 | | 5 | | | | | | | | | |
| $Al(OH)_3$ | | | | 10 | | | | | | | | |
| vermiculite | | | | | 20 | | | | | | | |
| $Mg(OH)_2$ | | | | | | 30 | | | | | | |
| agalmatolite | | | | | | | | 10 | | | | |
| kaolin | | | | | | | | | | 35 | 10 | |
| sericite | | | | | | | | | | | | 10 |
| montmorillonite | | | | | | | | | 10 | | | |
| $BaSO_4$ | 7 | 33 | 38 | 33 | 23 | 13 | 22 | 22 | 22 | 2 | 22 | 22 |
| aramid fiber | 10 | 5 | 5 | 5 | 5 | 5 | 10 | 10 | 10 | 10 | 10 | 10 |
| cashew dust | 10 | 10 | 10 | 10 | 10 | 10 | 15 | 15 | 15 | 10 | 15 | 15 |
| artificial graphite | 8 | | | | | | | | | | | |
| glass fiber | | | | | | | | | | | | |
| steel fiber | | | | | | | | | | | | |
| solid lubricant | | 7 | 7 | 7 | 7 | 7 | 8 | 8 | 8 | 8 | 8 | 8 |
| phenol resin | 20 | 25 | 25 | 25 | 25 | 25 | 25 | 25 | 25 | 25 | 25 | 25 |
| copper powder | 15 | | | | | | | | | | | |

(Note ) Figures in the table are in vol. %. The brass fiber contains copper of 70 wt.% and zinc of 30 wt.%. The bronze fiber is PBC2C of JIS. The copper type metallic fiber is 60μm in diameter and 3mm long.

5

Table 1-3

| Composition Ratios of Friction Materials | | | | | | | | | | | | |
|---|---|---|---|---|---|---|---|---|---|---|---|---|
| | embodiments | | | | | | | | | | | |
| raw material | D1 | D2 | D3 | D4 | D5 | D6 | D7 | D8 | D9 | D10 | D11 | D12 |
| copper fiber | 3 | 5 | 10 | 17 | 10 | 10 | 5 | 10 | 5 | 10 | 10 | 5 |
| brass fiber | | 5 | | | | 5 | 2 | | | | | |
| bronze fiber | | | | | | | | | | | | |
| phlogopite | 10 | | 10 | 5 | 10 | | 4 | 25 | | | | |
| muscovite | | | | | | | | | | 10 | 15 | 5 |
| talc | | 3 | | 3 | 5 | | 15 | 2 | 40 | | | |
| Aℓ(OH)$_3$ | 28 | | 10 | | | 5 | | 5 | | | | |
| vermiculite | | 25 | | | | 5 | | | | | | |
| Mg(OH)$_2$ | 5 | | | | | 5 | | | | | | 5 |
| agalmatolite | | | | | | | | | | | | 15 |
| kaolin | | | | | | | | | | 5 | | |
| sericite | | | | | | | | | | | | |
| chlorite | | | | | | | | | | | 5 | 5 |
| BaSO$_4$ | 10 | 18 | 20 | 13 | 17 | 21 | 26 | 12 | 3 | 17 | 19 | 7 |
| aramid fiber | 3 | 5 | 7 | 15 | 10 | 5 | 7 | 5 | 5 | 10 | 10 | 10 |
| cashew dust | 8 | 10 | 14 | 18 | 15 | 12 | 10 | 10 | 14 | 15 | 10 | 15 |
| artificial graphite | | | | | | | | | | | | |
| glass fiber | | | | | | | | | | | | |
| steel fiber | | | | | | | | | | | | |
| solid lubricant | 8 | 7 | 7 | 4 | 8 | 7 | 6 | 6 | 8 | 8 | 6 | 8 |
| phenol resin | 25 | 22 | 22 | 25 | 25 | 25 | 25 | 25 | 25 | 25 | 25 | 25 |

(Note 1) Figures in the table are in vol. %. The brass fiber contains copper of 70 wt.% and zinc if 30 wt.%. The bronze fiber is PBC2C of JIS. The copper-type metallic fiber is 60μm in diameter and 3mm long.

Table 1-4

| Composition Ratios of Friction Materials | | | | | | | | | | | | |
|---|---|---|---|---|---|---|---|---|---|---|---|---|
| | embodiments | | | | | | | | | | | |
| raw material | D13 | D14 | D15 | D16 | D17 | D18 | D19 | D20 | D21 | D22 | D23 | D24 |
| copper fiber | 5 | 10 | 5 | 5 | 5 | 10 | 10 | | 10 | 8 | 8 | 5 |
| brass fiber | | | | | | | | 3 | | | | |
| bronze fiber | | | | | | | | | | | | |
| phlogopite | | | | | | 35 | 10 | 10 | | | 28 | 15 |
| muscovite | 10 | | | | | | | | | | | |
| talc | 5 | | 10 | | 5 | 5 | | 5 | 28 | | 24 | |
| $A\ell(OH)_3$ | | 5 | | | | | | | | 35 | | |
| vermiculite | | | | | | | 35 | | 5 | | | |
| $Mg(OH)_2$ | | | | | 15 | | | | | 17 | | |
| agalmatolite | | | | 10 | | | | | | | | |
| kaolin | | 5 | 10 | | | | | | | | | |
| sericite | 10 | | 5 | 10 | | | | | | | | |
| chlorite | 5 | 10 | | | | | | | | | | |
| iron hydroxide | | | | | | | | | | | | 15 |
| $BaSO_4$ | 7 | 12 | 12 | 17 | 17 | 3 | 2 | 15 | 10 | | | 14 |
| aramid fiber | 10 | 10 | 10 | 10 | 10 | 5 | 5 | 10 | 5 | 5 | 5 | 10 |
| cashew dust | 15 | 15 | 15 | 15 | 15 | 10 | 8 | 10 | 10 | 8 | 8 | 10 |
| artificial graphite | | | | | | | | | | | | |
| glass fiber | | | | | | | | | | | | |
| steel fiber | | | | | | | | | | | | |
| solid lubricant | 8 | 8 | 8 | 8 | 8 | 7 | 5 | 7 | 7 | 5 | 5 | 7 |
| phenol resin | 25 | 25 | 25 | 25 | 25 | 25 | 25 | 25 | 25 | 22 | 22 | 24 |

(Note 1) Figures in the table are in vol. %. The brass fiber contains copper of 70 wt.% and zinc if 30 wt.%. The bronze fiber is PBC2C of JIS. The copper-type metallic fiber is 60μm in diameter and 3mm long.

Table 2

| Composition Ratios of Friction Materials | | | | | | |
|---|---|---|---|---|---|---|
| raw material | comparison example 1 | comparison example 2 | comparison example 3 | comparison example 4 | comparison example 5 | comparison example 6 |
| copper fiber | | 5 | | 15 | 20 | |
| brass fiber | | | 5 | | | 3 |
| copper powder | | | | | | |
| muscovite | | | | 5 | 45 | |
| artificial graphite | 8 | 8 | 8 | 8 | | |
| barium sulfate | 22 | 22 | 27 | 22 | | 25 |
| aramid fiber | | 10 | 10 | 10 | 5 | |
| cashew dust | 10 | 15 | 10 | 15 | 5 | 10 |
| asbestos | 35 | | | | | 30 |
| steel fiber | | | 15 | | | |
| phenol resin | 25 | 25 | 25 | 25 | 25 | 25 |
| rock wool | | 10 | | | | |
| glass fiber | | 5 | | | | |
| solid lubricant | | | | | | 7 |
| (Note) Figures in the table are in vol.%. The brass fiber contains copper of 70 wt.% and zinc of 30 wt.%. | | | | | | |

Next, with regard to the friction materials of the embodiment A1 to A5, A7, and B1 to B6 and the examples 1 to 4 for comparison, the static friction coefficients $\mu s$ and dynamic friction coefficients $\mu d$ thereof were measured. The measurement was carried out by setting the temperature of the respective opposite rotors to 50°C and pressing the friction materials against the opposite rotors with a surface pressure of 10kg/cm$^2$. The results of the measurement are shown in Table 3. Table 3 show the static friction coefficients and the respective ratios R between the static friction coefficients and the dynamic friction coefficients. From the results of the measurement, it was found that the friction materials of the examples 2 to 4 for comparison and the embodiment A4 had the ratio R larger than those of the other ones. It was also found that the friction materials of the embodiments A1, A2, A5, B1, B2 and B5 containing mica or talc, and the friction material of the example 1 for comparison containing asbestos had smaller values of the static friction coefficients $\mu s$ and also smaller values of the ratio R of the friction coefficients.

8

Table 3

| Results of Measurement of Friction Coefficients of Respective Friction Materials | | |
|---|---|---|
| friction material | $\mu s$ | $(\mu s/\mu d)$ R |
| A1 | 0.31 | 1.02 |
| A2 | 0.35 | 1.07 |
| A3 | 0.40 | 1.10 |
| A4 | 0.40 | 1.15 |
| A5 | 0.39 | 1.12 |
| A7 | 0.40 | 1.14 |
| B1 | 0.32 | 1.03 |
| B2 | 0.34 | 1.06 |
| B3 | 0.38 | 1.10 |
| B4 | 0.40 | 1.14 |
| B5 | 0.38 | 1.09 |
| B6 | 0.34 | 1.10 |
| comparison example 1 | 0.38 | 0.91 |
| comparison example 2 | 0.45 | 1.27 |
| comparison example 3 | 0.45 | 1.31 |
| comparison example 4 | 0.45 | 1.21 |

After that, a brake noise test was performed by using cars of 2000cc. Table 4 shows a braking schedule of this test.

Table 4    Braking Schedule of Brake Noise Test

| | 1. burnishing | 2.  braking test |
|---|---|---|
| braking conditions | initial speed: 40 km/h<br><br>final speed : 0 km/h<br><br>deceleration: 0.3G<br><br>number of braking operations: 30<br><br>temperature before start of braking:<br><br>100°C | initial speed: 40 km/h<br><br>final speed: 0 km/h<br><br>deceleration: 0.2G-0.6G<br><br>number of braking operations: 140<br><br>temperature before start of braking:<br><br>40-200°C |

(Note)  Conditions of the braking test were set by combination of the

deceleration and temperature before start of braking.

Brake noise in braking was measured by using a vibration pickup and vibrations were separated into 20Hz to 1KHz components through a bandpass filter. Whenever a vibration larger than prescribed level occurred, occurrence of brake noise was counted and the brake noises occurring during the braking test were separated into law-frequency brake noises and ordinary brake noises, whereby a ratio of occurrence of low-frequency brake noises was calculated. The results are shown in Tables 5-1 to 5-4 and Table 6. By comparison between Tables 5-1, 5-2 and Table 3, it is understood that the values of the ratios R of the friction coefficients of the friction materials and the ratios of occurrence of low-frequency brake noises are in proportional relation. Thus, it was found that the smaller the ratio R of the friction coefficients of the friction material is, the smaller the ratio of the occurrence of low-frequency brake noises is.

Table 5-1

| Results of Brake Noise | |
|---|---|
| Noise Test | |
| embodiment No. | noise occurence ratio [%] |
| A1 | 0 |
| A2 | 0 |
| A3 | 0.7 |
| A4 | 4.3 |
| A5 | 1.4 |
| A6 | not manufactured |
| A7 | 1.4 |

Table 5-2

| Results of Brake | |
|---|---|
| Noise Test | |
| embodiment No. | noise occurrence ratio [%] |
| B1 | 0 |
| B2 | 0 |
| B3 | 1.4 |
| B4 | 3.6 |
| B5 | 0.7 |
| B6 | 1.4 |

Table 5-3

| Results of Brake Noise | | Results of Brake | |
|---|---|---|---|
| Noise Test (1/2) | | Noise Test (2/2) | |
| embodiment No. | noise occurrence ratio [%] | embodiment No. | noise occurrence ratio [%] |
| C1 | 7.1 | C7 | 8.6 |
| C2 | 6.4 | C8 | 9.3 |
| C3 | 7.9 | C9 | 6.4 |
| C4 | 9.3 | C10 | 8.6 |
| C5 | 8.6 | C11 | 7.9 |
| C6 | 7.1 | | |

Table 5-4

| Results of Brake Noise | | Results of Brake Noise | |
|---|---|---|---|
| Test (1/2) | | Test (2/2) | |
| embodiment No. | noise occurrence ratio [%] | embodiment No. | noise occurrence .ratio [%] |
| D1 | 0 | D10 | 0.7 |
| D2 | 0.7 | D11 | 0 |
| D3 | 0 | D12 | 0 |
| D4 | 0 | D13 | 0 |
| D5 | 0 | D14 | 0 |
| D6 | 0.7 | D15 | 0.7 |
| D7 | 0 | D16 | 0.7 |
| D8 | 0 | D17 | 0 |
| D9 | 0 | D18 | not manufactured |
| | | D19 | not manufactured |
| | | D20 | not manufactured |
| | | D21 | |
| | | D22 | |
| | | D23 | |
| | | D24 | 0.7 |

Table 6

| Results of Brake Noise Test | |
|---|---|
| embodiment No. | noise occurence ratio |
| 1 | 0 |
| 2 | 25 |
| 3 | 16.4 |
| 4 | 14.3 |
| 5 | not manufufactured |
| 6 | 0 |

By comparison between Tables 5-1 to 5-4 and Table 6, the following features are made clear.

[1] In the case of using one type of inorganic substance having a plane netlike crystal structure as the filler

It is understood that the low frequency noise occurrence ratio is reduced in any of the cases of using, as the filler, mica (embodiments A1 to A7), talc (embodiments B1 to B7) and the other inorganic substance (embodiments C1 to C11) compared with the cases not containing such inorganic substances in the filler (the examples 2 to 5 for comparison). Particularly, in the case of using mica or in the case of using talc, the low- frequency noise occurence ratio remarkably reduced. In the example 1 and 6 for comparison, asbestos was used and in those cases, brake noise did not occur as mentioned previously. In addition, as for the group using mica, the low-frequency brake noise occurrence ratio in the case of a low content of mica (embodiment A4) was relatively high compared with the other embodiments of this group. Similarly, in the group using talc, the case of a small content of talc (embodiment B4) showed a relatively high brake noise occurrence ratio. In the embodiments A5 and B5, steel fiber was further added as the metallic fiber in addition to copper fiber or copper alloy fiber. In those cases, the low-frequency brake noise occurrence ratio was relatively high compared with the embodiment not containing steel fiber.

From the resuls of the above-mentioned performance test of the friction materials for brakes, the following points are made clear.

(1) Copper fiber or copper alloy fiber contained in the friction material is desirably in the range of 3 to 40 vol.%.

(2) Muscovite contained in the friction material is desirably in the range of 10 to 40 vol.% and more desirably in the range of 15 to 35 vol.%. A quantity of less than 10 vol.% would achieve littke effect of suppressing occurrence of low-frequency brake noise and, conversely, a quantity of more than 40 vol.% would make it difficult to thermally form the friction material.

Similarly, talc contained in the friction material is desirably in the range of 3 to 40 vol.% and more desirably in the range of 5 to 30 vol.%. A quantity of less than 3 vol.% would achieve little effect of suppressing occurrence of low-frequency brake noise and conversely a quantity of more than 30 vol.% would make it difficult to thermally form the friction material.

(3) Copper fiber or copper alloy fiber contained in the friction material has desirably an aspect ratio of 20 or more and a fiber diameter of 200μm or less.

(4) Mica may be selected among minerals of aluminum silicate system naturally produced, such as muscovite, phlogopite or biotite in scaly form having cleavage.

(5) The grain diameter is desirably larger than 350 mesh and small than 10 mesh, and grains of such diameter exists desirably in more than 50% of the whole of mica. Grains having a diameter larger than 10 mesh would considerably lower the formability of the friction material and grains having a diameter smaller than 500 mesh would achieve little effect of suppressing low-frequency brake noise.

[2] In the case of using two or more different inorganic substances having a plane netlike crystal structure as the filler (embodiments D1 to D23)

In this case, it is made clear by comparison between Table 6 and Tables 5-1 to 5-3 that the low-frequency brake noise occurrence ratio is further reduced and becomes substantially equal to zero.

Agalmatolite to be used may be any of naturally produced minerals having as a main component any of pyrophyllite, kaolin and sericite. Kaolin to be used may be kaolinite.

As for the friction materials of the embodiments D18 and D19, it is difficult to form those materials into a prescribed form as described previously. This is because if a large quantity of mica or virmiculite is used, the binder would have an insufficient binding force and if a quantity of the binder is considerably increased, the quantity of the binder would exceed a permissible value for forming a friction material. Therefore, the upper limit quantity of mica or vermiculite is 30 vol.%. If the addition quantity is too small, low-frequency brake noise could not be effectively suppressed.

A fading test was conducted with respect to the embodiments D2, D4, D5, D7, D8, D10, D12 and the embodiment C5. A fading phenomenon is a phenomenon in which the braking effect is lowered if a rapid temperature rise occurs as a result of continuous use on the like of the brake. Table 7 shows the braking schedule of the fading test.

## Table 7 Braking Test of Fading Test

| | 1. burnishing | 2. fading test |
|---|---|---|
| braking conditions | initial speed: 65 km/h | initial speed: 100 km/h |
| | final speed: 0 km/h | final speed: 0 km/h |
| | deceleration: 0.35 g | deceleration: 0.45 g |
| | number of braking operations: 35 | number of braking operations: 10 |
| | temperature before braking: 120°C | temperature before first braking: 65°C |

The test was carried out by using a dynamometer simulating a car of 2000cc in accordance with JASO C406-82. The applied moment of inertia was 5 kg·m·s², and brake discs actually manufactured were utilized. The minimum values of the friction coefficients of the respective embodiments among the 10 braking operations of the fading test were taken out and the results are shown in Table 8. As can be seen from Table 8, the minimum friction coefficient in the embodiment D9 containing talc of 40 vol.%, the minimum friction coefficient in the embodiment C5 containing Mg(OH)$_2$ of 30 vol.% are smaller than the minimum friction coefficients of the other embodiments.

Table 8

| Results of Fading Test | |
|---|---|
| embodiment No. | minimum friction coefficient in fading test |
| D2 | 0.23 |
| D4 | 0.22 |
| D5 | 0.25 |
| D7 | 0.24 |
| D8 | 0.21 |
| D9 | 0.09 |
| C5 | 0.09 |
| D10 | 0.10 |
| D12 | 0.14 |

In addition, a wearing test was carried out with respect to the embodiments D1, D3, D5, D8, D22 and the embodiments C3, C5. The conditions of the test are shown in Table 9. The applied moment of inertia was 4 kg·m·s$^2$ and brake discs actually manufactured were utilized.

Table 9   Conditions of Wearing Test

```
initial speed: 70 km/h

final speed: 0 km/h

deceleration: 0.30 g

number of braking operations: 500

temperature before braking: 200°C
```

The results of the wearing test are shown in Table 10. As can be seen from Table 10, the embodiment C5 containing Mg(OH)$_2$ of 30 vol.%, and the embodiment D22 containing Aℓ(OH)$_3$ of 35 vol.% had larger wear losses of pads compared with the other embodiments.

Table 10

| Results of Wearing Test | |
|---|---|
| embodiment No. | pad wear loss (mm) |
| D1 | 0.12 |
| D3 | 0.18 |
| D5 | 0.08 |
| D8 | 0.11 |
| C3 | 0.07 |
| C5 | 0.53 |
| D22 | 0.46 |

In addition, a test on opposite rotor's aggressivity was carried out with respect to the embodiments D1,

13

D4, D6, D20 and the example 6 for comparison. The conditions of the test are shown in Table 11. The applied moment of inertia was 4 kg•m•s², and brake discs actually manufactured were utilized.

## Table 11   Conditions of Opposite Rotor's Aggressivity Test

> initial speed: 100 km/h
>
> final speed: 0 km/h
>
> deceleration: 0.30 g
>
> number of braking operations: 500 times
>
> temperature before braking: 100°C

The results of the test are shown in Table 12. As can be seen form Table 12, the embodiment D20 including a large quantity of steel fiber as the main material had a larger wear loss of the rotor compared with the other embodiments. This was caused by the hardness of the steel fiber and it is the same with the case of steel powder. Therefore, preferably, the main material does not contain steel.

The embodiment D22 is the case in which a large quantity of aluminum hydroxide is added. In this case, the wear loss of the pad was increased. Therefore, the upper limit quantity of aluminum hydroxide is 30 vol.%. In order to suppress low-frequency brake noise, it is preferable to add aluminum hydroxide of more than 3 vol.%.

Table 12

| Wear Loss of Opposite Rotor | |
| --- | --- |
| embodiment No. | rotor wear loss (gr) |
| embodiment D1 | 0.8 |
| D4 | 0.7 |
| D6 | 1.2 |
| comparison example 6 | 0.9 |
| embodiment D20 | 3.2 |

By the above-described performance tests of the friction materials for brakes, the following points are made clear.

(1) Copper or copper alloy fiber contained in the friction material is desirably in the range of 2 to 20 vol.%.

(2) Mica contained in the friction material is desirably in the range of 4 to 30 vol.%. A quantity of less than 4 vol.% would achieve little effect of suppressing occurrence of low-frequency brake noise and conversely, a quantity of more than 30 vol.% would make it difficult to form a friction material. More preferably, the quantity of mica is in the range of 5 to 25 vol.%.

(3) Talc, montmorillonite and iron hydroxide contained in the friction material are desirably in the range of 2 to 25 vol.% respectively. A quantity of less than 2 vol.% of such materials would achieve little effect of suppressing occurrence of low-frequency brake noise and conversely a quantity of more than 25 vol.% would deteriorate the fading resistant property. More preferably, those materials are in the range of 2 to 20 vol.%.

(4) Aluminum hydroxide contained in the friction material is desirably in the range of 3 to 30 vol.%. A quantity of less than 3 vol.% would achieve little effect of suppressing occurrence of low-frequency brake noise and conversely a quantity of more than 30 vol.% would deteriorate the wear resistant property.

More preferably, the quantity of aluminum hydroxide is in the range of 5 to 25 vol.%.

(5) The grain diameter of mica is desirably larger than 44 $\mu$m and smaller than 840 $\mu$m. The grain diameter larger than 840 $\mu$m would considerably lower the formability of a friction material and the grain diameter smaller than 44$\mu$m would achieve little effect of suppressing occurrence of low-frequency brake noise.

(6) The grain diameter of vermiculite is desirably larger than 44$\mu$m and smaller than 1.7 mm. The grain diameter larger than 1.7 mm would considerably deteriorate the formability of a friction material and the grain diameter smaller than 44 $\mu$m would achieve little effect of suppressing low-frequecy brake noise.

(7) If mica and talc are used together, the ratio of mica and talc is preferably 1:4 to 1:12.

(8) If mica and aluminum hydroxide are used together, the ratio of mica and aluminum hydroxide is preferably 1:3 to 1:5.

(9) Magnesium hydroxide contained in the friction material is desirably in the range 3 to 25 vol.%. A quantity of less than 3 vol.% would achieve little effect of suppressing occurrence of low-frequency brake noise and conversely a quantity of more than 25 vol.% would deteriorate the wear resistant property. More preferably, the quantity of magnesium hydroxide is in the range of 5 to 20 vol.%.

(10) Kaolin contained in the friction material is desirably in the range of 3 to 30 vol.%. A quantity of less than 3 vol.% would achieve little effect of suppressing occurrence of low-frequency brake noise and conversely a quantity of more than 30 vol.% would considerably wear the opposite rotor. More preferably, the quantity of kaolin is in the range of 5 to 25 vol.%.

Although the present invention has been described and illustrated in detail, it is clearly understood that the same is by way of illustration and example only and is not to be taken by way of limitation, the spirit and scope of the present invention being limited only by the terms of the appended claims.

## Claims

1. In a friction material for brake formed by containing metallic fiber as a main component, adding a filler to the main component and binding the main component and the filler using a binder,
said metallic fiber including at least either copper fiber or copper alloy fiber, and
said filler including one or more inorganic substances having a plane netlike crystal structure excluding asbestos.

2. The friction material for brake in accordance with claim 1, wherein said filler includes one or more substances selected among mica, talc, vermiculite, aluminum hydroxide, magnesium hydroxide, agalmatolite, kaolin, chlorite, sericite, iron hydroxide and montmorillonite.

3. The friction material for brake in accordance with claim 1, wherein only mica of 10 to 40 vol.% is contained as said filler.

4. The friction material for brake in accordance with claim 1, wherein only talc of 3 to 40 vol.% is contained as said filler.

5. The friction material for brake in accordance with claim 1, wherein said filler includes two or more substances selected among mica, talc, vermiculite, aluminum hydroxide, magnesium hydroxide, agalmatolite, kaolin, chlorite and sericite.

6. The friction material for brake in accordance with claim 5, wherein said filler is contained in 6 to 50 vol.% in said friction material.

7. In a friction material for brake formed by containing aramid fiber as a main component, adding a filler to the main component and binding the main component and the filler using a binder,
said filler including one or more inorganic substances having a plane netlike plain netlike crystal structure excluding asbestos.

8. The friction material for brake in accordance with claim 7, wherein said filler includes one or more substances selected among mica, talc, vermiculite, aluminum hydroxide, magnesium hydroxide, agalmatolite, kaolin, chlorite and sericite.

9. The friction material for brake in accordance with claim 7, wherein only mica of 10 to 40 vol.% is contained as said filler.

10. The friction material for brake in accordance with claim 7, wherein only talc of 3 to 40 vol.% is contained as said filler.

11. The friction material for brake in accordance with claim 7, wherein said filler includes two or more substances selected among mica, talc, vermiculite, aluminum hydroxide, magnesium hydroxide, agalmatolite, kaolin, chlorite and sericite.

12. The friction material for brake in accordance with claim 11, wherein said filler is contained in 6 to 50 vol.% in said friction material.